# EUROPÄISCHE PATENTSCHRIFT

(11) **EP 1 493 220 B1**
(45) Veröffentlichungstag und Bekanntmachung des Hinweises auf die Patenterteilung: **28.11.2007**
(21) Anmeldenummer: 03712087.0
(22) Anmeldetag: 25.03.2003
(51) Int. Cl.: H02K 29/06, H02K 29/10, H02K 29/08

(54) **ELEKTRONISCH KOMMUTIERTER GLEICHSTROMMOTOR MIT EINER BRÜCKENSCHALTUNG**
ELECTRONICALLY COMMUTATED DC MOTOR COMPRISING A BRIDGE CIRCUIT
MOTEUR A COURANT CONTINU A COMMUTATION ELECTRONIQUE COMPRENANT UN CIRCUIT EN PONT

(30) Priorität: 11.04.2002 DE 10215895
(43) Veröffentlichungstag der Anmeldung: 05.01.2005
(73) Patentinhaber: ebm-papst St. Georgen GmbH & Co. KG, 78112 St. Georgen (DE)
(72) Erfinder: HEYDRICH, Walter, 78112 St. Georgen (DE); RAPPENECKER, Hermann, 78147 Vöhrenbach (DE); WEISSER, Wilhelm, 78126 Königsfeld (DE)
(74) Vertreter: Raible, Hans
(86) Internationale Anmeldenummer: PCT/EP2003/003067
(87) Internationale Veröffentlichungsnummer: WO 2003/085808

(56) Entgegenhaltungen:
- DE-A- 3 331 782
- DE-A- 3 526 007
- DE-A- 19 517 665
- US-A- 3 988 654
- US-A- 4 233 524
- US-A- 4 379 984
- US-A- 5 055 751

## Beschreibung

Die Erfindung betrifft einen elektronisch kommutierten Gleichstrommotor mit einer Vollbrückenschaltung.

Bei einem solchen Motor wird eine Mehrzahl von Rotorstellungssignalen erzeugt, und die einzelnen Halbleiterschalter der Vollbrückenschaltung werden durch Kombinationen dieser Rotorstellungssignale gesteuert. Bezeichnet man ein erstes Rotorstellungssignal mit H1 und ein zweites mit H2, so muss - als Beispiel - ein Halbleiterschalter der Vollbrücke eingeschaltet werden, wenn das eine Signal H1 den Wert 1 und das andere Signal H2 den Wert 0 hat. Dagegen muss ein anderer Halbleiterschalter der Vollbrücke z.B. dann eingeschaltet werden, wenn H2 den Wert 1 und H1 den Wert 0 hat.

Man benötigt für solche bekannte Motoren die Signale H1 und H2 in nicht invertierter Form, also als H1 und H2, und man benötigt sie in invertierter Form, also als /H1 und /H2. Ferner braucht man konjunktive logische Verknüpfungsglieder zum Verknüpfen dieser Signale, wobei häufig zusätzlich ein PWM-Signal berücksichtigt werden muss. Hierfür verwendet man gewöhnlich UND-Glieder.

Auf diese Weise erhält man komplexe Schaltungen mit vielen Bauelementen, was es bei kleinen Motoren schwierig macht, die Leiterplatte im Motorgehäuse unterzubringen und was die Herstellung der Leiterplatten - und damit der Motoren - verteuert, da man mehrlagige Leiterplatten benötigt. - Die DE 3 331 782 A1 betrifft die Ansteuerung einer Vollbrückenschaltung mittels einer sogenannte Gatterlogik, also einer Logikschaltung, bei der die Rotorstellungssignale durch UND-Glieder verknüpft werden. Deshalb ist es eine Aufgabe der Erfindung, einen neuen elektronisch kommutierten Motor mit Vollbrückenschaltung bereit zu stellen.

Nach der Erfindung wird diese Aufgabe gelöst durch den Gegenstand des Anspruchs 1. Der Steuertransistor bewirkt in einfacher Weise und ohne gesonderte Signal-Invertierung eine Verknüpfung von zwei Rotorstellungssignalen, kann bei Bedarf zusätzlich als Pegelwandler dienen, und ermöglicht die gegenseitige Verriegelung von oberem und unterem Brückentransistor eines Brückenzweigs. Die Schaltung wird durch die Erfindung so vereinfacht, dass die benötigte Leiterplatte auch für kleine Motoren einfach und preiswert hergestellt werden kann und man ggf. Bauraum für zusätzliche Motorfunktionen erhält.

Eine besonders einfache Lösung der gestellten Aufgabe ergibt sich durch den Gegenstand des Anspruchs 15. Dies ist eine sehr einfache Kommutierungsschaltung für einen dreisträngigen Motor kleiner Leistung, mit welcher dieser in einer vorgegebenen Drehrichtung betrieben werden kann.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:
- Fig. 1: eine erste Ausführungsform eines elektronisch kommutierten Gleichstrommotors nach der Erfindung, wobei in Fig. 1 zwei Varianten der Erfindung dargestellt sind,
- Fig. 2: eine zweite Ausführungsform eines erfindungsgemäßen Motors,
- Fig. 3: Diagramme zur Erläuterung der Erfindung,
- Fig. 4: eine Schaltungsvariante zu den Fig. 1 und 2, welche besonders dort einen verlustarmen Betrieb ermöglicht, wo die Betriebsspannung UB des Motors in relativ weiten Grenzen schwankt,
- Fig. 5: eine dritte Ausführungsform eines erfindungsgemäßen Motors,
- Fig. 6: eine erfindungsgemäße Schaltung mit einer dreisträngigen Halbbrücke, und
- Fig. 7: eine Schaltung mit einer dreisträngigen Vollbrücke, bei der die Logiktransistoren gleichzeitig als Endstufentransistoren verwendet werden.

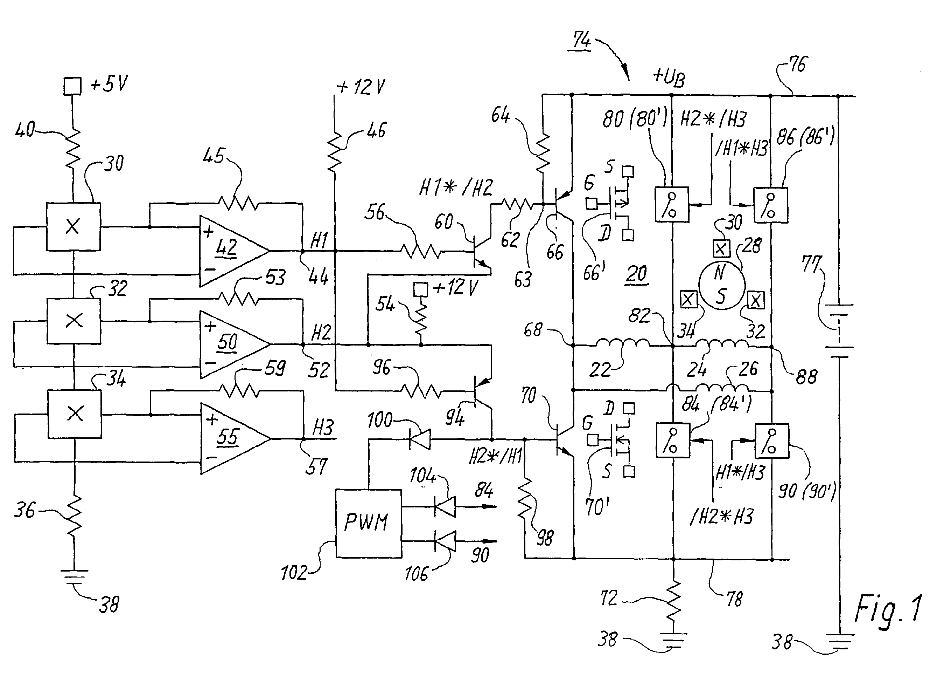

**Fig. 1** zeigt rechts einen elektronisch kommutierten Motor 20 mit drei Statorwicklungssträngen 22, 24, 26 und einem symbolisch angedeuteten, als zweipolig dargestellten permanentmagnetischen Rotor 28, um den herum drei Rotorstellungssensoren 30, 32, 34 in Abständen von 120° el. angeordnet sind, welche Signale H1, H2, H3 liefern. Diese drei Sensoren sind in Fig. 1 auch ganz links dargestellt. Sie sind in Reihe geschaltet. Der untere Sensor 34 ist über einen Widerstand 36 mit Masse 38 verbunden, während der obere Sensor 30 über einen Widerstand 40 mit einem positiven Potenzial verbunden ist, z.B. einer geregelten Hilfsspannung von + 5 V. Die Widerstände 36 und 40 sind gewöhnlich gleich groß. Die Sensoren 30, 32, 34 sind im Normalfall Hallgeneratoren, doch wären auch beliebige andere Sensoren möglich, z.B. optische Sensoren.

Die beiden Ausgangssignale des Hallgenerators 30 werden den Eingängen eines Komparators 42 zugeführt, dessen Ausgang 44 (mit offenem Kollektor) über einen Pullup-Widerstand 46 mit einer Hilfsspannung von z.B. +12 V verbunden ist, so das man am Ausgang 44 ein Signal H1 erhält, das abhängig von der Stellung des Rotors 28 entweder das Potenzial von Masse 38 oder ein Potenzial von etwa +12 V hat. Sehr vorteilhaft ist, dass dieses Potenzial je nach den Erfordernissen des Motors 20 frei wählbar ist. - Der Ausgang 44 ist über einen hochohmigen Mitkopplungswiderstand 45 mit dem Plus-Eingang des Komparators 42 verbunden.

In gleicher Weise sind die beiden Ausgänge des Hallgenerators 32 mit den beiden Eingängen eines Komparators 50 verbunden, dessen Ausgang 52 (mit offenem Kollektor) über einen Pullup-Widerstand 54 mit einem definierten positiven Potenzial verbunden ist, z.B. +12 V, so dass man am Ausgang 52 ein Signal H2 erhält, das abhängig von der Stellung des Rotors 28 entweder das Potenzial von Masse 38 oder ein positives Potenzial hat. Der Ausgang 52 ist über einen hochohmigen Mitkopplungswiderstand 53 mit dem Plus-Eingang des Komparators 50 verbunden.

Die beiden Ausgangssignale des Hallgenerators 34 werden den Eingängen eines Komparators 55 zugeführt, dessen Ausgang 57 (mit offenem Kollektor) über einen hochohmigen Mitkopplungswiderstand 59 mit dem Plus-Eingang verbunden ist. Am Ausgang 57 erhält man das Signal H3.

Der Ausgang 44 ist über einen Widerstand 56 mit der Basis eines npn-Steuertransistors 60 verbunden, dessen Emitter mit dem Ausgang 52 und dessen Kollektor über einen Widerstand 62 und einen Knotenpunkt 63 mit der Basis eines oberen Brückentransistors 66 verbunden ist, der als pnp-Transistor dargestellt ist, aber alternativ auch, wie angedeutet, ein P-Kanal-MOSFET 66' sein kann. Der Knotenpunkt 63 ist über einen Widerstand 64 mit der Betriebsspannung U_{B} verbunden. - Der Emitter des Transistors 66 ist ebenfalls mit der Betriebsspannung U_{B}, sein Kollektor ist über einen Knotenpunkt 68 mit dem Kollektor eines als unterer Brückentransistor dienenden npn-Transistors 70 verbunden, dessen Emitter über einen kleinen Widerstand 72 (zur Strommessung) mit Masse 38 verbunden ist.

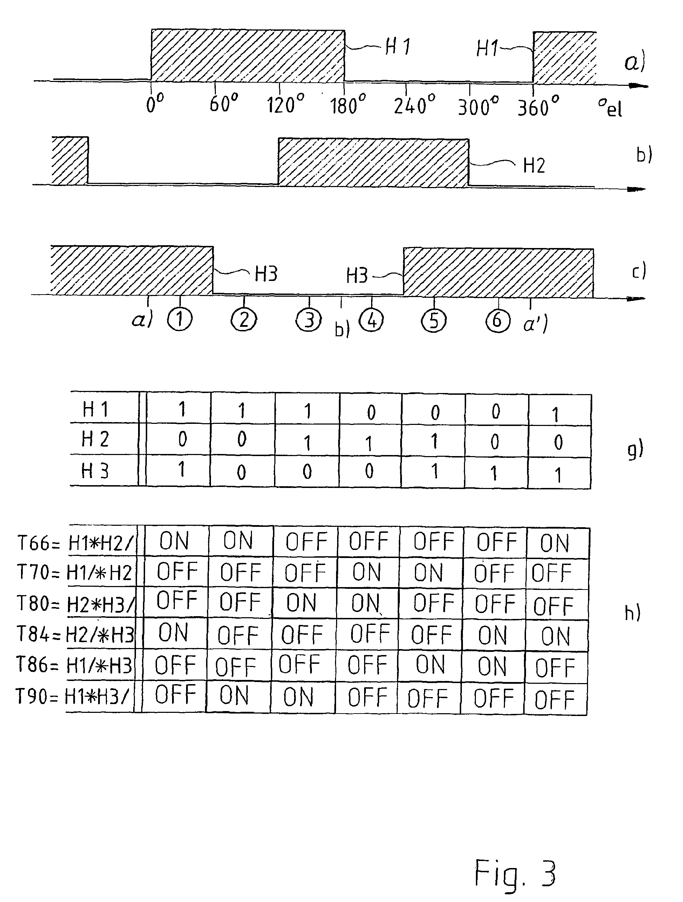

Die Brückentransistoren 66 und 70 bilden einen Zweig einer Vollbrückenschaltung 74, deren positive Gleichspannungsleitung mit 76 und deren negative Gleichspannungsleitung mit 78 bezeichnet ist und z.B. in der dargestellen Weise an eine Batterie 77 oder einen Gleichstrom-Zwischenkreis angeschlossen sein kann. Die Vollbrückenschaltung 74 enthält auch einen pnp-Transistor 80, der über einen Knotenpunkt 82 mit einem npn-Transistor 84 verbunden ist, sowie einen pnp-Transistor 86, der über einen Knotenpunkt 88 mit einem npn-Transistor 90 verbunden ist. Fig. 1 zeigt explizit nur die Ansteuerung der Transistoren 66 und 70. Die Ansteuerung der Transistoren 80 und 84 bzw. 86 und 90 erfolgt völlig analog, aber mit anderen zugeordneten Kombinationen der Ausgangssignale der Sensoren 30, 32 und 34, wie das in Fig. 3 explizit erläutert ist.

Gemäß Fig. 1 ist der Wicklungsstrang 22 zwischen den Knotenpunkten 68 und 82 angeschlossen, der Wicklungsstrang 24 zwischen den Knotenpunkten 82 und 88, und der Wicklungsstrang 26 zwischen den Knotenpunkten 68 und 88. Dies entspricht einer Dreieckschaltung der Wicklung. Eine Sternschaltung wäre gleichfalls möglich.

Die positive Gleichspannungsleitung 76 (+UB) ist über einen Widerstand 64 mit der Basis des Transistors 66 verbunden.

Der Ausgang 52 des Komparators 50 ist mit dem Emitter eines pnp-Steuertransistors 94 verbunden, dessen Basis über einen Widerstand 96 mit dem Ausgang 44 verbunden ist und dessen Kollektor bei Fig. 1 mit der Basis des Brückentransistors 70 und, über einen Widerstand 98, mit Masse 38 verbunden ist. Ferner ist dieser Kollektor mit der Anode einer Diode 100 verbunden, deren Katode mit einem PWM-Generator 102 verbunden ist. Letzterer ist auch über eine Diode 104 mit der Basis des unteren Brückentransistors 84 und über eine Diode 106 mit der Basis des unteren Brückentransistors 90 verbunden.

Wie in Fig. 1 schematisch angedeutet, können die oberen Brückentransistoren 66, 80, 86 durch P-Kanal-MOSFETs 66', 80', 86' ersetzt werden, und ebenso können die unteren Brückentransistoren 70, 84, 90 durch N-Kanal-MOSFETs 70', 84', 90' ersetzt werden.

Für die MOSFETs 66' und 70' ist das in Fig. 1 dargestellt. Beim MOSFET 66' wird die Source S mit der Leitung 76 verbunden, der Drain D mit dem Punkt 68, und das Gate G mit dem Verbindungspunkt 63. Beim MOSFET 70' wird der Drain D mit dem Punkt 68 verbunden, die Source S mit der Leitung 78, und das Gate G mit dem Kollektor des Steuertransistors 94.

### Bevorzugte Werte der Bauelemente in Fig. 1

Es bedeuten k = kOhm, M = MOhm. Die Werte der Bauelemente beziehen sich auf die in Fig. 1 dargestellten bipolaren Brückentransistoren 66, 70, 80, 84, 86, 90 bei einem U_{B} von 18 bis 33 V.

| | |
|---|---|
| Hallgeneratoren 30, 32, 34 | ...HW101A |
| R 36, 40 | ...200 Ohm |
| Komparatoren 42, 50, 55 | ...LM2901 |
| R 45, 53, 59 | ...1 M |
| R 46, 54 | ...2,2 k |
| R 56, 96 | ...47 k |
| Transistor 94 | ...BC847BPN |
| Transistor 60 | ...BC847B |
| R 62, 64, 98 | ...4,7 k |
| Dioden 100, 102, 104 | ...RB731 U |
| Brückentransistoren 66, 80, 86 | ...BD680 |
| Brückentransistoren 70, 84, 90 | ...BD679 |
| Widerstand 72 | ...56 mOhm |
| Alternativ: | |
| MOSFETs 66', 70', 80', 84', 86', 90' | ...IRF7343 |

### Arbeitsweise von Fig. 1

**Fig. 3** zeigt bei a), b) und c) zur Erläuterung die drei Hallsignale H1, H2, H3 während einer Drehung des Rotors 28 von 360° el.

Fig. 3g) zeigt für die Rotorstellungen 1 (30° el.), 2 (90° el.) bis 6 (330° el.) beispielhaft die logischen Werte der Hallsignale.

Fig. 3h) zeigt, dass im Drehstellungsbereich zwischen 0° und 120° el. der Transistor 66 eingeschaltet wird, weil H1 = 1 und H2 = 0, also /H2 = 1, ist. Ebenso wird im Drehstellungsbereich zwischen 0 und 60° el. der untere Transistor 84 eingeschaltet, weil /H2 = 1 und H3 = 1 sind. Der Strom fließt also im Drehwinkelbereich 0° el. bis 60° el. von der positiven Gleichspannungsleitung 76 über den Brückentransistor 66, die Wicklungsphase 22, den Brückentransistor 84 und den Widerstand 72 nach Masse 38. Entsprechend der Tabelle in Fig. 3h) erfolgt für jeden Drehstellungsbereich die richtige Kommutierung, wie das dem Fachmann bekannt ist.

Im Drehstellungsbereich zwischen 0 und 120° el. ist der Ausgang 44 des Komparators 42 hochohmig, so dass dieser Ausgang, und mit ihm die Basis des Transistors 60, über den Widerstand 46 ein positives Potenzial H1 erhält.

Der Ausgang 52 des Komparators 50 ist in diesem Drehstellungsbereich über den Komparator 50 intern mit Masse 38 verbunden, so dass der Emitter des Transistors 60 an Masse liegt. Dadurch ist der Transistor 60 leitend, und man erhält einen Strom durch die Widerstände 64 und 62. Der Spannungsabfall am Widerstand 64 ist so groß, dass der obere Brückentransistor 66 sicher eingeschaltet wird.

Im Winkelbereich zwischen 180° el. und 300° el. ist /H1 = 1, und ebenso ist H2 = 1, so dass der untere Brückentransistor 70 eingeschaltet wird.

In diesem Fall ist der Komparator 50 hochohmig, so dass der Emitter des Transistors 94 über den Pullup-Widerstand 54 an eine geeignete positive Spannung, z.B. +12 V, gelegt wird, d.h. H2 = 1.

Der Ausgang 44 des Komparators 42 ist im Winkelbereich 180 bis 300° el. intern mit Masse 38 verbunden, so dass H1 = 0 ist, also /H1 = 1, und über den Widerstand 96 erhält die Basis des Transistors 94 etwa das Potenzial von Masse 38, so dass dieser Transistor 94 leitet und am Widerstand 98 ein entsprechender Spannungsabfall auftritt, der den unteren Brückentransistor 70 voll, d.h. mit einem niedrigen Innenwiderstand, einschaltet.

Wenn der Ausgang des PWM-Generators 102 positiv ist, sperren die Dioden 100, 104, 106, und die Gate-Potenziale der unteren Brückentransistoren 70, 84, 90 werden nicht beeinflusst. Hat dagegen dieser Ausgang Massepotenzial, so werden die Dioden 100, 104, 106 leitend und ziehen die Potenziale an den Basen der unteren Brückentransistoren 70, 84, 90 auf einen niedrigen Wert, so dass diese Brückentransistoren sperren.

Als besondere Vorteile sind zu nennen:
- Die Erzeugung von invertierten Steuersignalen (/H1, /H2) ist nicht mehr erforderlich.
- Die Schaltung ist auf kleinen Leiterplatten leichter und preiswerter zu realisieren.
- Auf der Leiterplatte erhält man Platz für zusätzliche Motorfunktionen.
- Man kann preiswertere Komponenten verwenden. Z.B. genügt oft eine zweilagige Leiterplatte.
- Zum Erzeugen der Steuersignale für den oberen Brückentransistor wird kein zusätzlicher Transistor ("Pegelwandlertransistor") benötigt.
- Man kann die Ansteuerung der unteren Brückentransistoren optimieren. Bei einem MOSFET kann die optimale Spannung U_{GS} für das Einschalten z.B. 15 bis 20 V betragen, und man benötigt entsprechende Steuerströme. Optimiert man, was mit der Erfindung möglich ist, diese Werte, so kann man den Einschaltwiderstand der unteren MOSFETs 70', 84', 90' um 10 bis 12 % reduzieren, wodurch die Verluste abnehmen und der Wirkungsgrad des Motors steigt.
- Bei einer Vollbrückenschaltung ergibt sich automatisch eine gegenseitige Verriegelung von oberem und unterem Brückentransistor, z.B. der Transistoren 66 und 70 oder 66' und 70'.
- Bei Verwendung von Bipolartransistoren 66, 70 ergibt sich ein äußerst einfacher Aufbau der Endstufen.
- Verwendet man die Kombination von Hallgenerator 30 und Komparator 42, so erhält man eine sehr preiswerte Elektronik und kann oft ohne Multilayer-Leiterplatte arbeiten, also nur mit zwei Lagen. Verwendet man Hall-ICs plus Multilayer, so lassen sich Leiterplatten für noch kleinere Motoren realisieren.

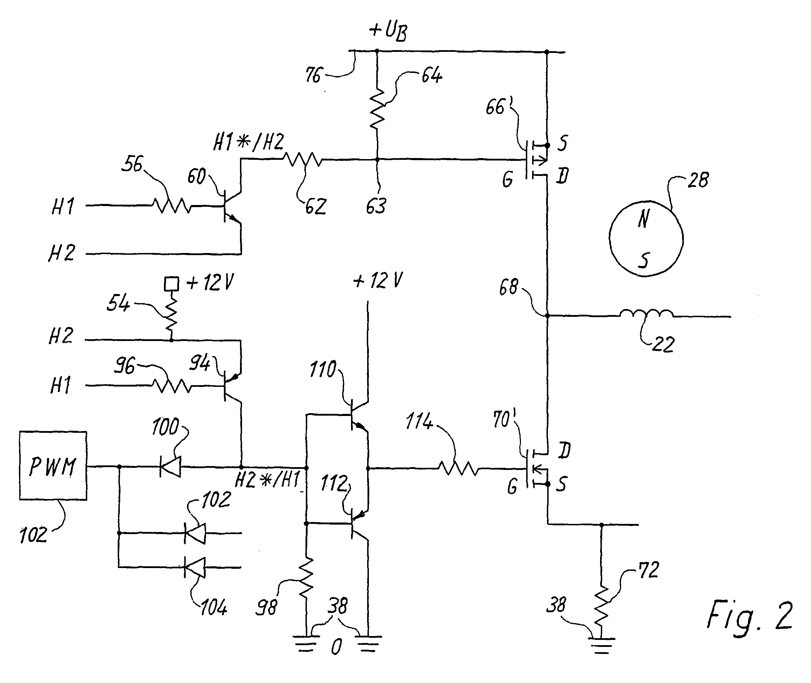

**Fig. 2** zeigt eine Variante, bei der im wesentlichen nur die Teile dargestellt sind, die sich von Fig. 1 unterscheiden. Gleiche oder gleich wirkende Teile wie in Fig. 1 werden deshalb nicht nochmals beschrieben.

Das Potenzial am Kollektor des Transistors 94 wird hier den Basen eines npn-Transistors 110 und eines pnp-Transistors 112 zugeführt, deren Emitter miteinander verbunden und über einen Widerstand 114 mit dem Gate G des unteren Transistors 70 verbunden sind.

Der Kollektor des Transistors 110 ist z.B. mit + 12 V verbunden, und der Kollektor des Transistors 112 mit Masse 38.

Wenn der Transistor 94 leitet, erhält der Transistor 110 ein positives Potenzial an seiner Basis und schaltet ein, während der Transistor 112 sperrt. Dadurch wird der Transistor 70 schnell eingeschaltet.

Wenn der Transistor 94 sperrt, sperrt auch der Transistor 110, und der Transistor 112 erhält das Potenzial 0 V an seiner Basis, so dass er einschaltet und dadurch das Gate G des Transistors 70 auf Masse 38 zieht und den Transistor 70 rasch abschaltet.

Die Schaltung nach Fig. 2 eignet sich besonders dort, wo der PWM-Generator mit einer hohen Frequenz arbeitet, denn bei 25 kHz muss die Gatekapazität des Transistors 70 pro Sekunde 25.000 Mal geladen und entladen werden, und die erforderliche rasche Umladung mit hohen Strömen ist über die beiden Transistoren 110, 112 problemlos möglich, so dass sich im unteren Transistor 70 eine schnelle Umschaltung und niedrige Verlustleistung ergibt.

Sofern für den Brückentransistor 70' ein bipolarer Transistor verwendet wird, kann man dessen Basis niederohmig ansteuern. Dadurch werden die Ladungsträger schnell zur Basis zu- und abgeführt. Das Resultat ist eine schnelle Umschaltung bei niedrigen Verlusten, also einem guten Wirkungsgrad des Motors.

### Bevorzugte Werte der Bauelemente in Fig. 2

Die mit Fig. 1 übereinstimmenden Werte werden nicht angegeben.

| | |
|---|---|
| Transistoren 60, 94, 110, 112 | ...BC847BPN |
| R 98 | ...100 k |
| R 114 | ...100 Ohm |
| R 54, 64 | ...10 k |

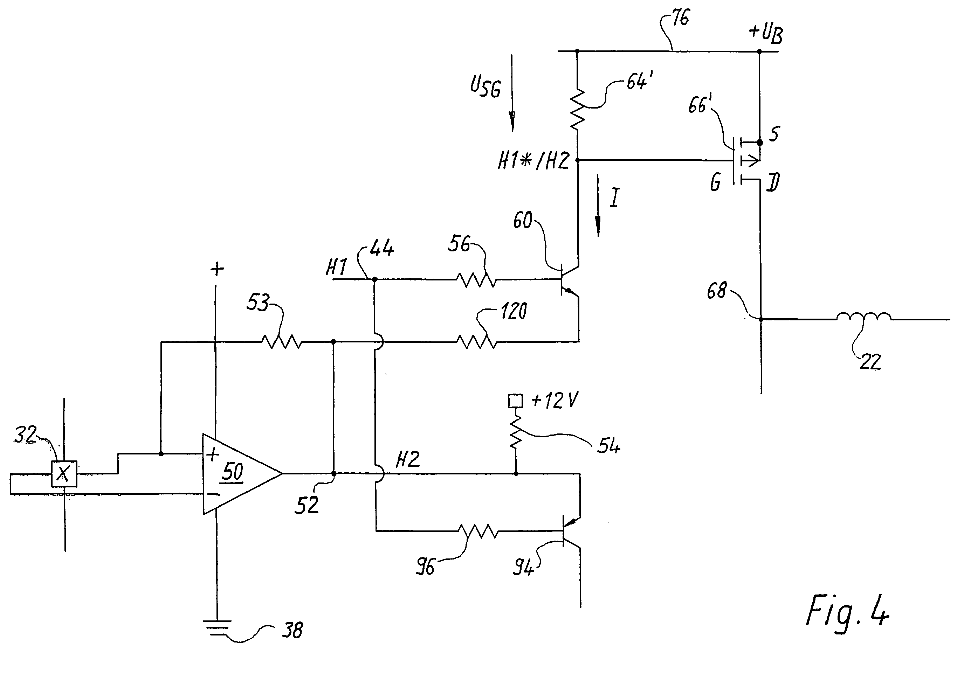

**Fig. 4** zeigt eine Variante für den oberen Steuertransistor 60. Diese Variante kann bei Fig. 1 und 2 verwendet werden. Gleiche oder gleich wirkende Teile werden mit den gleichen Bezugszeichen bezeichnet wie dort und gewöhnlich nicht nochmals beschrieben.

Der Kollektor des oberen npn-Steuertransistors 60 ist hier direkt mit dem Gate G des oberen P-Kanal-MOSFET 66' und über einen Widerstand 64' mit der positiven Gleichspannungsleitung 76 verbunden.

Ferner ist der Emitter des Steuertransistors 60 über einen Emitterwiderstand 120 mit dem Ausgang 52 des Komparators 50 verbunden, also mit dem Signal H2, so dass der Transistor 60 wie eine Konstantstromquelle wirkt, wenn H2 = 0 und H1 = 1 sind.

Wenn die Betriebsspannung U_{B} schwankt, was bei einer Fahrzeugbatterie 77 der Normalfall ist, bleibt durch den Widerstand 120 der Kollektorstrom des Steuertransistors 60 weitgehend konstant, so dass auch der Spannungsabfall USG am Widerstand 64' weitgehend konstant ist. Deshalb kann dieser Spannungsabfall durch Wahl des Widerstands 64' auf einen Wert eingestellt werden, der nur geringfügig kleiner ist als die maximal zulässige Spannung USG (z.B. 20 V) für das Einschalten des P-Kanal-MOSFET 66'. Bei Bipolar-Brückentransistoren kann die Emitter-Basis-Spannung auf einen ausreichend großen Wert für einen sicheren Schaltbetrieb eingestellt werden. Der Transistor 60 arbeitet hier im analogen Bereich und ist daher schneller, als wenn er im übersteuerten Betrieb betrieben würde, was die Verluste im Motor 20 reduziert.

### Bevorzugte Werte der Bauelemente in Fig. 4

UB = 18 bis 33 V
Signale H1, H2 = +5 V Amplitude

| | |
|---|---|
| R 64' | ...2 k |
| Strom l | 4,2 mA |
| R 56 | ...10 k |
| R 120 | ...1 k |
| U_{SG} | 8,4 V |

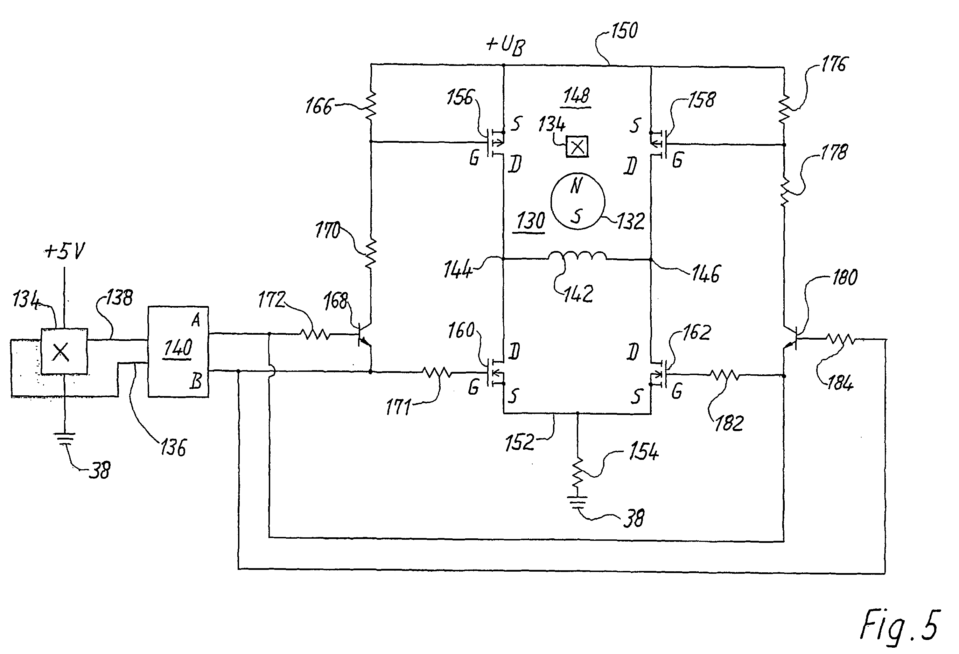

**Fig. 5** zeigt eine Kommutierungsschaltung für einen sogenannten einsträngigen (einphasigen) Motor 130 mit einem permanentmagnetischen Rotor 132, der einen Hallgenerator 134 steuert, welcher in Fig. 5 ganz links nochmals dargestellt ist und dessen Ausgangssignale zwei Eingängen 136, 138 eines Mikrocontrollers 140 zugeführt werden. Diese Schaltung eignet sich besonders für preiswerte Lüfter mit niedriger Leistung, also niedrigen Strömen.

Der Rotor 132 steht in Wechselwirkung mit einer einsträngigen Statorwicklung 142, die zwischen zwei Anschlusspunkten 144, 146 einer H-Brücke 148 angeschlossen ist. Diese hat einen positiven Anschluss 150, dem eine Betriebsspannung + U_{B} zugeführt wird, und einen negativen Gleichspannungsanschluss 152, der über einen niederohmigen Messwiderstand 154 mit Masse 38 verbunden ist.

Zwischen dem positiven Gleichspannungsanschluss 150 und dem Anschlusspunkt 144 liegt als oberer Brückentransistor ein P-Kanal-MOSFET 156, ebenso ein P-Kanal-MOSFET 158 zwischen dem positiven Gleichspannungsanschluss 150 und dem Anschlusspunkt 146.

Zwischen dem Anschlusspunkt 144 und dem negativen Gleichspannungsanschluss 152 liegt als unterer Brückentransistor ein N-Kanal-MOSFET 160, und zwischen dem Anschlusspunkt 146 und dem negativen Gleichspannungsanschluss 152 ein N-Kanal-MOSFET 162. Die Drains D der beiden Brückentransistoren 156 und 160 sind miteinander verbunden, ebenso die Drains D der Brückentransistoren 158 und 162.

Zwischen dem positiven Gleichspannungsanschluss 150 und dem Gate G des P-Kanal-MOSFET 156 liegt ein Widerstand 166. Zwischen dem Gate G des Brückentransistors 156 und dem Kollektor eines npn-Steuertransistors 168 liegt ein Widerstand 170. Der Emitter des Transistors 168 ist direkt mit dem Ausgang B des Mikrocontrollers 140 und über einen Widerstand 171 mit dem Gate G des Brückentransistors 160 verbunden. Die Basis des Transistors 168 ist über einen Widerstand 172 mit einem Ausgang A des Mikrocontrollers 140 verbunden.

Das Gate G des Brückentransistors 158 ist über eine Widerstand 176 mit der Leitung 150 und über einen Widerstand 178 mit dem Kollektor eines npn-Steuertransistors 180 verbunden, dessen Emitter direkt mit dem Ausgang A und über einen Widerstand 182 mit dem Gate G des Brückentransistors 162 verbunden ist. Die Basis des Transistors 180 ist über einen Widerstand 184 mit dem Ausgang B des Prozessors 140 verbunden.

### Bevorzugte Werte für Fig. 5 (k = kOhm)

| | |
|---|---|
| Hallgenerator 134 | ...HW101 A |
| R 172 | ...22 k |
| Steuertransistoren 168, 180 | ...BC847B |
| R 166, 176 | ...3,3 k |
| R 170, 178 | ...4,7 k |
| R 171, 182 | ...1 k |
| R 154 | ...56 mOhm |
| MOSFETs 156, 158, 160, 162 | ...IRF7343 |

### Arbeitsweise von Fig. 5

Bei normal arbeitendem Mikrocontroller 140 sind die Ausgänge A und B alternierend hoch, d.h. wenn A hoch ist, ist B niedrig, und wenn B hoch ist, ist A niedrig.

Wenn der Ausgang A ein hohes Potenzial hat, ist der Steuertransistor 180 gesperrt, so dass der obere Brückentransistor 158 sperrt und der untere Brückentransistor 162 leitet. Der Ausgang B hat dann etwa das Potenzial von Masse 38, so dass der Steuertransistor 168 leitend ist und vom positiven Gleichspannungsanschluss 150 über die Widerstände 166, 170 und den Transistor 168 ein Strom zum Ausgang B fließt. Dadurch erhält der obere Brückentransistor 156 eine genügend hohe Spannung zwischen Source und Gate, so dass er einschaltet.

Da der Ausgang B auf Masse liegt, erhält der untere Brückentransistor 160 in diesem Fall an seinem Gate G ein niedriges Signal und sperrt.

Wird der Ausgang B hoch und der Ausgang A niedrig, so sperrt der Steuertransistor 168, so dass der obere Brückentransistor 156 ebenfalls sperrt. Dagegen erhält der untere Brückentransistor 160 jetzt ein positives Signal an seinem Gate G und wird leitend. Der Steuertransistor 180 wird leitend, so dass der obere Brückentransistor 158 leitend wird, während der untere Brückentransistor 162 durch das niedrige Potenzial an A gesperrt wird.

Schaltet durch einen Fehler im Mikrocontroller 140 oder seinem Programm der Ausgang B auf hoch, während A noch hoch ist, so kann nur während der ansteigenden Flanke des (falschen) Signals am Ausgang B der untere Brückentransistor 160 eingeschaltet werden, während der obere Brückentransistor 156 noch leitend ist, da direkt anschließend die Basis und der Emitter des Steuertransistors 168 dasselbe Potenzial erhalten, so dass der Steuertransistor 168 sperrt und den oberen Brückentransistor 156 abschaltet. Analoges gilt für die Brückentransistoren 158 und 162 auf der rechten Seite der H-Brücke 148.

Es kann also nur ganz kurzzeitig ein Stromimpuls durch beide Brückentransistoren 156, 160 fließen, bis der Steuertransistor 168 den oberen Brückentransistor 156 abschaltet. Dieser kurze Stromimpuls führt nicht zur Zerstörung der Brückentransistoren 156 und 160, d.h. bei einem Fehler des Mikrocontrollers 140 oder seines Programms bleibt der Motor 130 stehen und wird nicht zerstört, weil der linke Steuertransistor 168 hier zusätzlich wie eine Verriegelung zwischen den MOSFETs 156 und 160 wirkt. Analoges gilt für den rechten Steuertransistor 180.

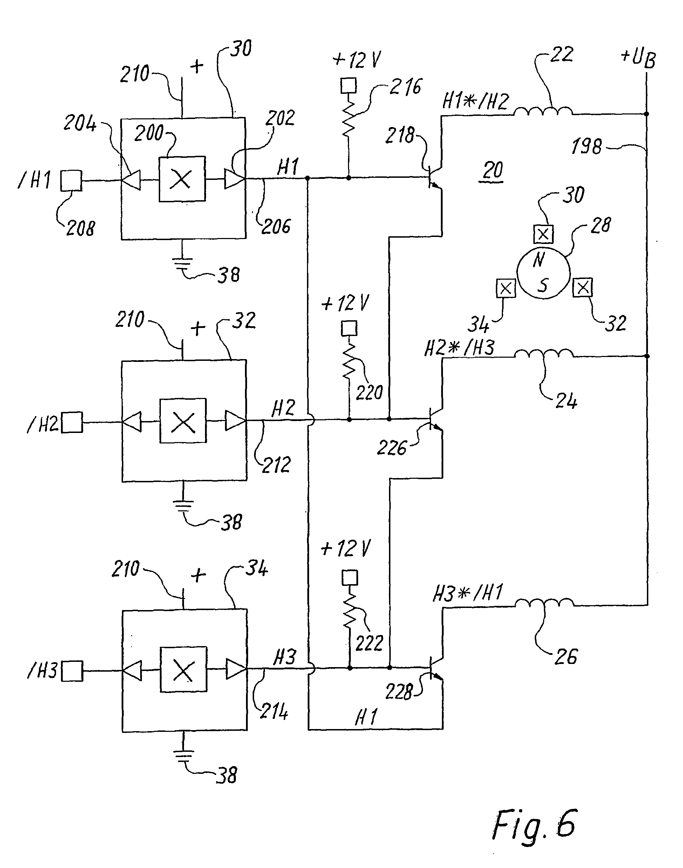

**Fig. 6** zeigt eine Schaltung für eine dreisträngige Halbbrücke. Die drei Stränge 22, 24, 26 des Motors 20 sind im Stern geschaltet. Der Sternpunkt 198 ist mit +UB verbunden.

Der Motor 20 hat einen als zweipolig dargestellten permanentmagnetischen Rotor 28, welcher drei Hall-ICs 30, 32, 34 steuert, die mit Abständen von 120° el. um den Rotor 28 herum angeordnet sind. Diese Hall-ICs sind in Fig. 6 links nochmals dargestellt. Bevorzugt werden hier drei identische Power-Hall-ICs verwendet. Z.B. enthält der Hall-IC 30 einen Hallgenerator 200, dessen beide Ausgangssignale H1 und /H1 jeweils von einem Komparator 202 bzw. 204 (mit offenem Kollektor) erzeugt werden. Solche Power-Hall-ICs können an ihren Ausgängen 206, 208 bei einer am Plusanschluss 210 angelegten Spannung von +5 V einen Strom von 150 mA und bei +12 V einen Strom von 100 mA treiben.

Bei Fig. 6 wird, wie dargestellt, jeweils nur der Ausgang 206 bzw. 212 bzw. 214 verwendet.

Der Ausgang 206 ist über einen Pullup-Widerstand 216 mit einer Spannung von z.B. + 12 V und direkt mit der Basis eines npn-Steuertransistors 218 verbunden, so dass diese Basis das Signal H1 vom Sensor 30 erhält. Der Emitter des Transistors 218 erhält vom Ausgang 212 des Sensors 32 das Signal H2, so dass man am Kollektor des Transistors 218 wie angegeben das Verknüpfungssignal H1 * /H2 erhält, mit dem der Strang 22 direkt gesteuert wird, d.h. wenn der Ausgang 212 ein niedriges Potenzial und der Ausgang 206 ein hohes Potenzial hat, wird der Transistor 218 leitend, und es fließt von +UB über den Strang 22, den Steuertransistor 218 und den Hall-IC 32 ein Strom nach Masse 38.

Der Ausgang 212 des Sensors 32 ist über einen Pullup-Widerstand 220 mit +12 V verbunden, und der Ausgang 214 des Sensors 34 ist über einen Pullup-Widerstand 22 ebenfalls mit +12 V verbunden.

Der Strang 24 erhält seinen Strom über einen Steuertransistor 226, der Strang 26 über einen Steuertransistor 228.

Die Basis des Transistors 226 erhält ihr Steuersignal H2 vom Ausgang 212. Sein Emitter erhält das Signal H3 vom Ausgang 214, so dass man am Kollektor des Transistors 226 die Signalkombination H2 * /H3 erhält, bei deren Vorhandensein ein Strom durch den Strang 24 fließt.

Die Basis des Transistors 228 erhält ihr Steuersignal H3 vom Ausgang 214, und sein Emitter erhält das Signal H1 vom Ausgang 206, so dass man am Kollektor des Transistors 228 die Signalverknüpfung H3* /H1 erhält, bei deren Vorhandensein ein Strom durch den Strang 26 fließt.

Dies ist also eine sehr einfache Kommutierungsschaltung für einen dreisträngigen Motor, mit welcher ein Motor kleiner Leistung in einer vorgegebenen Drehrichtung betrieben werden kann. Die Steuertransistoren 218, 226, 228, welche zur Signalverknüpfung dienen, werden hier gleichzeitig als Endstufentransistoren verwendet, welche die Ströme in den drei Statorsträngen 22, 24, 26 steuern. Die Hall-ICs 30, 32, 34 liegen hier parallel an einer gemeinsamen Stromversorgung 210.

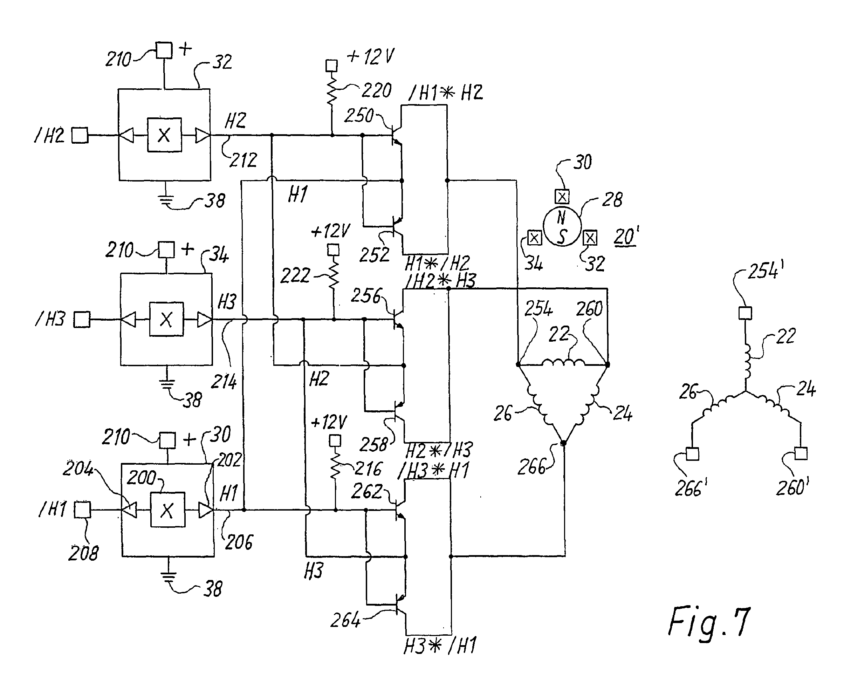

**Fig. 7** zeigt eine ähnliche Schaltung, aber für einen Motor 20', dessen dreisträngige Statorwicklung hier wie dargestellt in Dreieckschaltung betrieben werden kann. Als Variante ist auch eine Schaltung der drei Stränge in Sternschaltung dargestellt.

Der Motor 20', sein Rotor 28, seine Wicklungsstränge 22, 24, 26 und seine drei Hallsensoren 30, 32, 34 sind gleich bezeichnet wie in Fig. 6 und werden deshalb nicht nochmals beschrieben. Die Sensoren 30, 32, 34 sind in Fig. 7 links nochmals dargestellt und stimmen mit Fig. 6 überein, sind also Power-Hall-ICs, weshalb auf die dortige Beschreibung verwiesen wird, auch zu den Pullup-Widerständen 216, 220, 222.

Die Schaltung nach Fig. 7 ist eine Vollbrückenschaltung für einen dreisträngigen Motor, wobei die Verknüpfungstransistoren nicht nur die Sensorsignale verknüpfen, sondern auch direkt den Strom im Motor 20' steuern, wobei der Motorstrom über die Pullup-Widerstände bzw. die internen Komparatoren 202 etc. fließt, wie nachfolgend beschrieben.

Der Ausgang 212 des Hall-IC 230 ist mit der Basis eines npn-Steuertransistors 250 und eines pnp-Steuertransistors 252 verbunden, deren Emitter miteinander und mit dem Ausgang 206 verbunden sind. Ihre Kollektoren sind ebenfalls miteinander und mit einem Anschluss 254 verbunden, an den die Stränge 22 und 26 angeschlossen sind.

Der Ausgang 214 des Hall-IC 34 ist mit der Basis eines npn-Steuertransistors 256 und der Basis eines pnp-Steuertransistors 258 verbunden, deren Emitter miteinander und dem Ausgang 212 verbunden sind. Ihre Kollektoren sind ebenfalls miteinander und mit einem Anschluss 260 verbunden, an welchen die Stränge 22 und 24 angeschlossen sind.

Der Ausgang 206 des Hall-IC 30 ist mit der Basis eines npn-Steuertransistors 262 und der Basis eine pnp-Steuertransistors 264 verbunden, deren Emitter miteinander und mit dem Ausgang 214 verbunden sind. Ihre Kollektoren sind mit einem Anschluss 266 verbunden, an den die Stränge 24 und 26 angeschlossen sind.

Soll der Motor 20' in Sternschaltung betrieben werden, so wird die Wicklung gemäß der in Fig. 7 rechts dargestellten Variante geschaltet, und der Anschluss 254 wird der Anschluss 254', der Anschluss 256 wird der Anschluss 256', etc., wie das der Fachmann des Elektromaschinenbaus weiß.

### Arbeitsweise von Fig. 7

Der Steuertransistor 250 wird leitend, wenn der Ausgang 212 (Signal H2) hoch ist und wenn der Ausgang 206 (Signal H1) niedrig ist. Dies entspricht gemäß Fig. 3 dem Drehwinkelbereich 180 ... 240° el., in welchem der Ausgang 214 (Signal H3) niedrig ist, so dass auch der Steuertransistor 258 leitet, da die Bedingung H2 * /H3 erfüllt ist.

Deshalb fließt ein Strom über den Widerstand 220 und den Transistor 258 zum Anschluss 260, von dort weiter über den Strang 22 zum Anschluss 254, und weiter über den Transistor 250 und den Komparator 202 des Hall-IC 30 nach Masse 38, so dass also der Wicklungsstrang 22 in diesem Drehwinkelbereich Strom erhält. Gleichzeitig fließt auch ein Strom über die in Reihe geschalteten Wicklungsstränge 24 und 26. Die Kommutierung folgt im übrigen dem Muster nach Fig. 3, so dass hierauf verwiesen werden kann.

Diese Schaltung eignet sich besonders gut für Motoren mit geringer Leistung, bei welchen ein weitgehend konstantes Drehmoment verlangt wird, wie das für dreisträngige, sechspulsige Motoren charakteristisch ist. Da hier die Logiktransistoren gleichzeitig die Endstufentransistoren der Vollbrückenschaltung sind, kommt man mit drei Power-Hall-ICs 30, 32, 34 und sechs Transistoren 250, 252, 256, 258, 262, 264 aus, hat also einen sehr geringen Aufwand an Bauelementen für einen dreisträngigen, sechspulsigen Motor mit Vollbrückenschaltung. Dies erlaubt es, die Bauteile auf einer sehr kleinen Leiterplatte unterzubringen, oder aber auf einer etwas größeren Leiterplatte zusätzliche Funktionen zu realisieren, wie sie von Fall zu Fall vom Kunden verlangt werden.

Naturgemäß sind im Rahmen der vorliegenden Erfindung vielfache Abwandlungen und Modifikationen möglich, z.B. durch die Verwendung anderer Transistortypen im Leistungskreis, etc.

## Patentansprüche

1. Elektronisch kommutierter Gleichstrommotor, welcher aufweist:
Einen Stator mit mindestens einer Statorwicklung (22, 24, 26; 142); eine mit dem Stator in elektromagnetischer Wechselwirkung stehenden Rotor (28; 132);
eine positive Gleichspannungsleitung (76; 150) und eine negative Gleichspannungsleitung (78; 152) zur Stromversorgung des Motors (20), insbesondere aus einer Batterie (77);
eine Vollbrückenschaltung (74; 148) zum Steuern des Stromes in der mindestens einen Statorwicklung (22, 24, 26; 142), welche Vollbrückenschaltung (74; 148) eine Mehrzahl von Brückenzweigen aufweist,
die jeweils einen oberen Brückentransistor (66, 80, 86; 66'; 156, 158) zur Steuerung des Stromes von der positiven Gleichspannungsleitung (76; 150) zu einem zugeordneten Anschluss (68; 144, 146) dieser Statorwicklung (22, 24, 26; 142) sowie einen unteren Brückentransistor (70, 84, 90; 70'; 160, 162) zur Steuerung des Stromes von dem betreffenden Anschluss (68; 144, 146) der Statorwicklung (22, 24, 26; 142) zur negativen Gleichspannungsleitung (78; 152) aufweist;
eine Anordnung (134) zur Erzeugung einer Mehrzahl von Rotorstellungssignalen (H1, H2, H3; A, B);
eine Anordnung zum Steuern eines vorgegebenen Brückentransistors durch Verknüpfung von diesem zugeordneten Rotorstellungssignalen, wobei zur Verknüpfung dieser Rotorstellungssignale ein Steuertransistor (60; 94; 168) vorgesehen ist, dessen Basis ein erstes Rotorstellungssignal (H1; A) und dessen Emitter ein zweites Rotorstellungssignal (H2; B) zuführbar ist, und dessen Kollektorsignal dazu dient, den Strom in einer zugeordneten Statorwicklung (22, 24, 26; 142) zu steuern.

2. Motor nach Anspruch 1, bei welchem die Steuerelektrode des vorgegebenen Brückentransistors (66; 70; 66', 70'; 156) über einen Widerstand (64; 98; 166) mit einer diesem Brückentransistor zugeordneten Gleichspannungsleitung (76; 150; 78) verbunden ist.

3. Motor nach Anspruch 1 oder 2, bei welchem als oberer Brückentransistor ein pnp-Transistor (66, 80, 86) vorgesehen ist, und der Steuertransistor für diesen pnp-Brückentransistor als npn-Transistor (60) ausgebildet ist.

4. Motor nach Anspruch 1 oder 2, bei welchem als oberer Brückentransistor ein P-Kanal-MOSFET (66') vorgesehen ist, und der Steuertransistor für diesen P-Kanal-MOSFET (66') als npn-Transistor (60) ausgebildet ist.

5. Motor nach Anspruch 3 oder 4, bei welchem der Steuertransistor (60; 156) für den oberen Brückentransistor (66; 156) in seinem Emitterkreis einen Widerstand (129; 170) aufweist (Fig. 4, 5).

6. Motor nach einem der vorhergehenden Ansprüche, bei welchem als unterer Brückentransistor ein npn-Transistor (70, 84, 90) vorgesehen ist, und der Steuertransistor für diesen npn-Transistor als pnp-Transistor (94) ausgebildet ist.

7. Motor nach einem der Ansprüche 1 bis 5, bei welchem als unterer Brückentransistor ein N-Kanal-MOSFET (70') vorgesehen ist, und der Steuertransistor für diesen N-Kanal-MOSFET (70') als pnp-Transistor (94) ausgebildet ist.

8. Motor nach Anspruch 7, bei welchem das Gate (G) eines N-Kanal-MOSFET (70') mit dem Kollektor des ihm zugeordneten Steuertransistors (94) und - über einen Widerstand (98) - mit einem Potenzial verbunden ist, welches im wesentlichen dem Potenzial der negativen Gleichspannungsleitung (78; 152) entspricht.

9. Motor nach einem der vorhergehenden Ansprüche, bei welchem das Signal am Kollektor eines einem unteren Brückentransistor (70; 70') zugeordneten Steuertransistors (94) vor der Zufuhr zur Steuerelektrode dieses unteren Brückentransistors (70) durch einen Verstärker (110, 112) verstärkt wird, welcher im wesentlichen eine Zweipunktcharakteristik aufweist (Fig. 2).

10. Motor nach einem der vorhergehenden Ansprüche, bei welchem an die Steuerelektrode mindestens eines unteren Brückentransistors (70; 70') ein PWM-Signalgeber (102) angeschlossen ist, welcher bei einem entsprechenden PWM-Signal diesen unteren Brückentransistor (70; 70') dadurch sperrt, dass er dessen Steuerspannung reduziert.

11. Motor nach Anspruch 10, bei welchem der PWM-Signalgeber (102) über ein nur in einer Richtung leitendes Glied (100, 104, 106) an die Steuerelektrode des zugeordneten unteren Brückentransistors (70, 84, 90; 70') angeschlossen ist.

12. Motor nach einem der vorhergehenden Ansprüche, bei welchem die Vollbrückenschaltung als H-Brücke (148) ausgebildet ist, welche als obere Brückentransistoren zwei P-Kanal-MOSFETs (156, 158) und als untere Brückentransistoren zwei N-Kanal-MOSFETs (160, 162) aufweist, und zur Steuerung eines als npn-Transistor ausgebildeten Steuertransistors (168) zwei gegenphasige rotorstellungsabhängige Signale (A, B) dienen, von denen das eine der Basis und das andere dem Emitter dieses Steuertransistors (168) zuführbar ist.

13. Motor nach Anspruch 12, bei welchem der Kollektor eines Steuertransistors (168) über einen Widerstand (170) mit dem Gate (G) des ihm zugeordneten oberen Brückentransistors (156) verbunden ist, welches Gate über einen Widerstand (166) mit der positiven Gleichspannungsleitung (150) verbunden ist.

14. Motor nach Anspruch 12 oder 13, bei welchem eines der rotorstellungsabhängigen Signale (B) dem Emitter des Steuertransistors (168) und, vorzugsweise über einen Widerstand (170), dem Gate (G) des zugeordneten unteren Brückentransistors (160) zuführbar ist.

15. Elektronisch kommutierter Gleichstrommotor, welcher aufweist:
Einen Stator mit einer Mehrzahl von Statorwicklungssträngen (22, 24, 26); einen mit dem Stator in elektromagnetischer Wechselwirkung stehenden Rotor (28);
eine positive Gleichspannungsleitung (198) und eine negative Gleichspannungsleitung (38) zur Stromversorgung des Motors (20), insbesondere aus einer Batterie (77);
eine Brückenschaltung zum Steuern des Stromes in den Statorwicklungssträngen (22, 24, 26), welche Brückenschaltung eine Mehrzahl von Brückenzweigen aufweist, die jeweils mindestens einen Transistor (218, 226, 228) zur Steuerung des Stromes von den Gleichspannungsleitungen (38, 198) zu einem zugeordneten Statorwicklungsstrang (22, 24, 26) aufweisen; eine Anordnung (30, 32, 34) zur Erzeugung einer Mehrzahl von Rotorstellungssignalen (H1, H2, H3);
eine Anordnung zum Ansteuern eines den Strom in einem zugeordneten Statorwicklungsstrang (22, 24, 26) steuernden Transistors (218, 226, 228) durch Verknüpfung der diesem Transistor zugeordneten Rotorstellungssignale (H1, H2, H3), indem seiner Basis ein erstes dieser zugeordneten Rotorstellungssignale (H1) und seinem Emitter ein zweites dieser zugeordneten Rotorstellungssignale (H2) zugeführt wird (Fig. 6).

16. Motor nach Anspruch 15, bei welchem der einem Statorwicklungsstrang (22, 24, 26) zugeordnete Transistor (218, 226, 228) in dessen Stromkreis angeordnet ist (Fig. 6).

17. Motor nach Anspruch 15 oder 16, bei welchem zur Erzeugung eines Rotorstellungssignals (H1, H2, H3) ein Rotorstellungssensor (200) vorgesehen ist, welcher an seinem Ausgang einen Komparator (202, 204) aufweist, der als Komparator mit offenem Kollektor ausgebildet ist und jeweils einen Teil des Stromkreises eines im Augenblick eingeschalteten Statorwicklungsstranges (22, 24, 26) bildet (Fig. 6).

## Claims

1. Electronically commutated direct current motor, having:
a stator with at least one stator winding (22, 24, 26; 142);
a rotor (28; 132) which interacts electromagnetically with the stator;
a positive direct voltage line (76; 150) and a negative direct voltage line (78; 152) to supply current to the motor (20), in particular from a battery (77);
a full bridge circuit (74; 148) to control the current in the at least one stator winding (22, 24, 26; 142), said full bridge circuit (74; 148) having multiple bridge branches, each of which has an upper bridge transistor (66, 80, 86; 66'; 156, 158) to control the current from the positive direct voltage line (76; 150) to an associated termination (68; 144, 146) of this stator winding (22, 24, 26; 142), and a lower bridge transistor (70, 84, 90; 70'; 160, 162) to control the current from the relevant termination (68; 144, 146) of the stator winding (22, 24, 26; 142) to the negative direct voltage line (78; 152);
an arrangement (134) to generate multiple rotor position signals (H1, H2, H3; A, B);
an arrangement to control a specified bridge transistor by linking rotor position signals which are associated with it, a control transistor (60; 94; 168), to the base of which a first rotor position signal (H1; A) and to the emitter of which a second rotor position signal (H2; B) can be fed, and the collector signal of which is used to control the current in an associated stator winding (22, 24, 26; 142), being provided to link these rotor position signals.

2. Motor according to Claim 1, wherein the control electrode of the specified bridge transistor (66; 70; 66', 70'; 156) is connected via a resistor (64; 98; 166) to a direct voltage line (76; 150; 78) which is associated with this bridge transistor.

3. Motor according to Claim 1 or 2, wherein as the upper bridge transistor a pnp transistor (66, 80, 86) is provided, and the control transistor for this pnp bridge transistor is in the form of an npn transistor (60).

4. Motor according to Claim 1 or 2, wherein as the upper bridge transistor a P-channel MOSFET (66') is provided, and the control transistor for this P-channel MOSFET (66') is in the form of an npn transistor (60).

5. Motor according to Claim 3 or 4, wherein the control transistor (60; 156) for the upper bridge transistor (66; 156) has a resistor (129; 170) in its emitter circuit (Figs. 4, 5).

6. Motor according to one of the preceding claims, wherein as the lower bridge transistor an npn transistor (70, 84, 90) is provided, and the control transistor for this npn transistor is in the form of a pnp transistor (94).

7. Motor according to one of Claims 1 to 5, wherein as the lower bridge transistor an N-channel MOSFET (70') is provided, and the control transistor for this N-channel MOSFET (70') is in the form of a pnp transistor (94).

8. Motor according to Claim 7, wherein the gate (G) of an N-channel MOSFET (70') is connected to the collector of the control transistor (94) which is associated with it, and - via a resistor (98) - to a potential which essentially corresponds to the potential of the negative direct voltage line (78; 152).

9. Motor according to one of the preceding claims, wherein the signal at the collector of a control transistor (94) which is associated with a lower bridge transistor (70, 70'), before being fed to the control electrode of this lower bridge transistor (70), is amplified by an amplifier (110, 112), which essentially has a two-position characteristic (Fig. 2).

10. Motor according to one of the preceding claims, wherein to the control electrode of at least one lower bridge transistor (70; 70'), a PWM signal transmitter (102), which in the case of a corresponding PWM signal blocks this lower bridge transistor (70; 70') by reducing its control voltage, is connected.

11. Motor according to Claim 10, wherein the PWM signal transmitter (102) is connected via an element (100, 104, 106) which conducts in only one direction to the control electrode of the associated lower bridge transistor (70, 84, 90; 70').

12. Motor according to one of the preceding claims, wherein the full bridge circuit is in the form of an H bridge (148), which has as upper bridge transistors two P-channel MOSFETs (156, 158) and as lower bridge transistors two N-channel MOSFETs (160, 162), and to control a control transistor (168) in the form of an npn transistor, two signals (A, B) which are of opposite phase and depend on the rotor position are used, and one of them can be fed to the base, and the other to the emitter, of this control transistor (168).

13. Motor according to Claim 12, wherein the collector of a control transistor (168) is connected via a resistor (170) to the gate (G) of the upper bridge transistor (156) which is associated with it, said gate being connected via a resistor (166) to the positive direct voltage line (150).

14. Motor according to Claim 12 or 13, wherein one of the signals (B) which depend on the rotor position is fed to the emitter of the control transistor (168) and, preferably via a resistor (170), to the gate (G) of the associated lower bridge transistor (160).

15. Electronically commutated direct current motor, having:
a stator with multiple stator winding phases (22, 24, 26) ;
a rotor (28) which interacts electromagnetically with the stator;
a positive direct voltage line (198) and a negative direct voltage line (38) to supply current to the motor (20), in particular from a battery (77);
a bridge circuit to control the current in the stator winding phases (22, 24, 26), said bridge circuit having multiple bridge branches, each of which has at least one transistor (218, 226, 228) to control the current from the direct voltage lines (38, 198) to an associated stator winding phase (22, 24, 26);
an arrangement (30, 32, 34) to generate multiple rotor position signals (H1, H2, H3);
an arrangement to control a transistor (218, 226, 228) which controls the current in an associated stator winding phase (22, 24, 26) by linking the rotor position signals (H1, H2, H3) which are associated with this transistor, a first of these associated rotor position signals (H1) being fed to its base, and a second of these associated rotor position signals (H2) being fed to its emitter (Fig. 6).

16. Motor according to Claim 15, wherein the transistor (218, 226, 228) which is associated with a stator winding phase (22, 24, 26) is arranged in its circuit (Fig. 6).

17. Motor according to Claim 15 or 16, wherein to generate a rotor position signal (H1, H2, H3), a rotor position sensor (200) is provided, and has at its output a comparator (202, 204), which is in the form of a comparator with an open collector, and at any one time forms part of the circuit of a stator winding phase (22, 24, 26) which is switched on at this time (Fig. 6).

## Revendications

1. Moteur à courant continu à commutation électronique, lequel présente :
un stator avec au moins un enroulement statorique (22, 24, 26 ; 142) ;
un rotor (28 ; 132) en interaction électromagnétique avec le stator ;
une ligne de tension continue positive (76 ; 150) et une ligne de tension continue négative (78 ; 152) pour l'alimentation électrique du moteur (20), en particulier à partir d'une batterie (77) ;
un circuit en pont intégral (74 ; 148) pour commander le courant dans ledit au moins un enroulement statorique (22, 24, 26 ; 142), lequel circuit en pont intégral (74 ; 148) présente une pluralité de branches de pont qui présentent chacune un transistor de pont supérieur (66, 80, 86 ; 66' ; 156, 158) pour commander le courant allant de la ligne de tension continue positive (76 ; 150) à une connexion (68 ; 144, 146) associée de cet enroulement statorique (22, 24, 26 ; 142) ainsi qu'un transistor de pont inférieur (70, 84, 90 ; 70' ; 160, 162) pour commander le courant allant de la connexion (68 ; 144, 146) concernée de l'enroulement statorique (22, 24, 26 ; 142) à la ligne de tension continue négative (78 ; 152) ;
un dispositif (134) pour générer une pluralité de signaux de position de rotor (H1, H2, H3 ; A, B) ;
un dispositif pour commander un transistor de pont prédéfini par combinaison de signaux de position de rotor associés à celui-ci, dans lequel, pour combiner ces signaux de position de rotor, il est prévu un transistor de commande (60 ; 94 ; 168) à la base duquel peut être amené un premier signal de position de rotor (H1 ; A) et à l'émetteur duquel peut être amené un deuxième signal de position de rotor (H2 ; B) et dont le signal de collecteur sert à commander le courant dans un enroulement statorique (22, 24, 26 ; 142) associé.

2. Moteur selon la revendication 1, dans lequel l'électrode de commande du transistor de pont prédéfini (66 ; 70 ; 66', 70' ; 156) est reliée par une résistance (64 ; 98 ; 166) à une ligne de tension continue (76 ; 150 ; 78) associée à ce transistor de pont.

3. Moteur selon la revendication 1 ou 2, dans lequel un transistor PNP (66, 80, 86) est prévu comme transistor de pont supérieur, et le transistor de commande pour ce transistor de pont PNP est conçu comme transistor NPN (60).

4. Moteur selon la revendication 1 ou 2, dans lequel un MOSFET à canal P (66') est prévu comme transistor de pont supérieur,
et le transistor de commande pour ce MOSFET à canal P (66') est conçu comme transistor NPN (60).

5. Moteur selon la revendication 3 ou 4, dans lequel le transistor de commande (60 ; 156) pour le transistor de pont supérieur (66 ; 156) présente une résistance (129 ; 170) dans son circuit d'émetteur (fig. 4, 5).

6. Moteur selon l'une des revendications précédentes, dans lequel un transistor NPN (70, 84, 90) est prévu comme transistor de pont inférieur,
et le transistor de commande pour ce transistor NPN est conçu comme transistor PNP (94).

7. Moteur selon l'une des revendications 1 à 5, dans lequel un MOSFET à canal N (70') est prévu comme transistor de pont inférieur,
et le transistor de commande pour ce MOSFET à canal N (70') est conçu comme transistor PNP (94).

8. Moteur selon la revendication 7, dans lequel la grille (G) d'un MOSFET à canal N (70') est reliée au collecteur du transistor de commande (94) qui lui est associé et, par l'intermédiaire d'une résistance (98), à un potentiel qui correspond essentiellement au potentiel de la ligne de tension continue négative (78 ; 152).

9. Moteur selon l'une des revendications précédentes, dans lequel le signal au collecteur d'un transistor de commande (94) associé à un transistor de pont inférieur (70 ; 70') est amplifié par un amplificateur (110, 112), qui présente essentiellement une caractéristique à deux points, avant d'être amené à l'électrode de commande de ce transistor de pont inférieur (70) (fig. 2).

10. Moteur selon l'une des revendications précédentes, dans lequel un générateur de signaux PWM (102) est connecté à l'électrode de commande d'au moins un transistor de pont inférieur (70 ; 70'), lequel, sur un signal PWM correspondant, bloque ce transistor de pont inférieur (70 ; 70') en réduisant sa tension de commande.

11. Moteur selon la revendication 10, dans lequel le générateur de signaux PWM (102) est connecté à l'électrode de commande du transistor de pont inférieur (70, 84, 90 ; 70') associé par l'intermédiaire d'un organe (100, 104, 106) conduisant seulement dans un sens.

12. Moteur selon l'une des revendications précédentes, dans lequel le circuit en pont intégral est conçu comme pont en H (148) qui présente deux MOSFET à canal P (156, 158) en tant que transistors de pont supérieurs et deux MOSFET à canal N (160, 162) en tant que transistors de pont inférieurs, et on utilise pour la commande d'un transistor de commande (168) conçu comme transistor NPN deux signaux (A, B) en opposition de phase, dépendants de la position du rotor, dont l'un peut être amené à la base et l'autre à l'émetteur de ce transistor de commande (168).

13. Moteur selon la revendication 12, dans lequel le collecteur d'un transistor de commande (168) est relié par une résistance (170) à la grille (G) du transistor de pont supérieur (156) qui lui est associé, laquelle grille est reliée par une résistance (166) à la ligne de tension continue positive (150).

14. Moteur selon la revendication 12 ou 13, dans lequel un des signaux dépendants de la position du rotor (B) peut être amené à l'émetteur du transistor de commande (168) et, de préférence par l'intermédiaire d'une résistance (170), à la grille (G) du transistor de pont inférieur (160) associé.

15. Moteur à courant continu à commutation électronique, lequel présente :
un stator avec une pluralité d'enroulements statoriques (22, 24, 26) ;
un rotor (28) en interaction électromagnétique avec le stator ;
une ligne de tension continue positive (198) et une ligne de tension continue négative (38) pour l'alimentation électrique du moteur (20), en particulier à partir d'une batterie (77) ;
un circuit en pont intégral pour commander le courant dans les enroulements statoriques (22, 24, 26), lequel circuit en pont intégral présente une pluralité de branches de pont qui présentent chacune au moins un transistor (218, 226, 228) pour commander le courant allant des lignes de tension continue (38, 198) à un enroulement statorique (22, 24, 26) associé ;
un dispositif (30, 32, 34) pour générer une pluralité de signaux de position de rotor (H1, H2, H3) ;
un dispositif pour commander un transistor (218, 226, 228) commandant le courant dans un enroulement statorique (22, 24, 26) associé par combinaison des signaux de position de rotor (H1, H2, H3) associés à ce transistor en amenant à sa base un premier signal de position de rotor (H1) associé à celui-ci et à son émetteur un deuxième signal de position de rotor (H2) associé à celui-ci (fig. 6).

16. Moteur selon la revendication 15, dans lequel le transistor (218, 226, 228) associé à un enroulement statorique (22, 24, 26) est disposé dans son circuit (fig. 6).

17. Moteur selon la revendication 15 ou 16, dans lequel est prévu un capteur de position de rotor (200) pour générer un signal de position de rotor (H1, H2, H3), lequel présente à sa sortie un comparateur (202, 204) qui est conçu comme comparateur à collecteur ouvert et forme chaque fois une partie du circuit d'un enroulement statorique (22, 24, 26) actuellement activé (fig. 6).
